Europäisches Patentamt

European Patent Office

Office européen des brevets

(19)

(11) **EP 0 700 183 B1**

(12) **EUROPÄISCHE PATENTSCHRIFT**

(45) Veröffentlichungstag und Bekanntmachung des Hinweises auf die Patenterteilung:
**29.10.2003 Patentblatt 2003/44**

(21) Anmeldenummer: **95112841.2**

(22) Anmeldetag: **16.08.1995**

(51) Int Cl.$^7$: **H04L 1/00**, H04L 27/22, H04B 17/00, H03M 13/00, H04B 7/005, H04B 1/66, H04B 7/26

(54) **Gewinnung bitspezifischer Zuverlässigkeitsinformationen in einem digitalen Übertragungssystem mit M-stufiger orthogonaler Modulation**

Method for generation of bit reliability information for a digital transmission system using M-ary orthogonal modulation

Procédé de génération d'information de fiabilité pour chaque bit dans un système de transmission de données utilisant une modulation orthogonale à plusieurs niveaux

(84) Benannte Vertragsstaaten:
**DE FR GB IT**

(30) Priorität: **02.09.1994 DE 4431237**

(43) Veröffentlichungstag der Anmeldung:
**06.03.1996 Patentblatt 1996/10**

(73) Patentinhaber: **ROBERT BOSCH GMBH**
**70442 Stuttgart (DE)**

(72) Erfinder:
 • **Benthin, Marcus, Dipl.-Ing.**
 **D-31139 Hildesheim (DE)**
 • **Kammeyer, Karl-Dirk, Dr. Ing.**
 **D-21244 Buchholz (Nordheide) (DE)**

(56) Entgegenhaltungen:
DE-A- 3 910 739          DE-A- 4 224 214
GB-A- 2 185 367          US-A- 5 119 400

 • VARDY A ET AL: "BIT LEVEL SOFT DECISION DECODING OF REED-SOLOMON CODES" PROCEEDINGS OF THE 16TH IEEE CONFERENCE OF ELECTRICAL AND ELECTRONICS ENGINEERS IN ISRAEL, 7. - 9.März 1989, NEW YORK, US, Seiten 1-4, XP000077566
 • BAHL L R ET AL: "OPTIMAL DECODING OF LINEAR CODES FOR MINIMIZING SYMBOL ERROR RATE" IEEE TRANSACTIONS ON INFORMATION THEORY, Bd. IT-20, Nr. 2, März 1974, NEW YORK, US, Seiten 284-287, XP000647243

 • WOERZ T ET AL: "ITERATIVE DECODING FOR MULTILEVEL CODES USING RELIABILITY INFORMATION" GLOBECOM '92, COMMUNICATION FOR GLOBAL USERS, Bd. 3 OF 3, 6. - 9.Dezember 1992, NEW YORK, US, Seiten 1779-1784, XP000390480
 • KAZUHIKO YAMAGUCHI ET AL: "A SOFT DECISION VITERBI DECODING METHOD USING RECEIVED CARRIER LEVEL IN FADING CHANNEL" ELECTRONICS & COMMUNICATIONS IN JAPAN, PART I - COMMUNICATIONS, Bd. 73, Nr. 2, 1.Februar 1990, NEW YORK, US, Seiten 42-52, XP000140239
 • HAGENAUER J.: "Viterbi decoding of convolutional codes for fading- and burst-channels" 1980 INTERNATIONAL ZÜRICH SEMINAR ON DIGITAL COMMUNICATIONS, 4. - 6.März 1980, NEW YORK, US, Seiten g2.1-g2.7, XP002037572
 • BENTHIN M ET AL: "VITERBI DECODING OF CONVOLUTIONAL CODES WITH RELIABILITY INFORMATION FOR A NONCOHERENT RAKE-RECEIVER IN A CDMA-ENVIRONMENT" PROCEEDINGS OF THE GLOBAL TELECOMMUNICATIONS CONFERENCE (GLOBECOM), SAN FRANCISCO, NOV. 28 - DEC. 2, 1994, Bd. 3 OF 3, 28.November 1994, INSTITUTE OF ELECTRICAL AND ELECTRONICS ENGINEERS, Seiten 1758-1762, XP000488826

EP 0 700 183 B1

**Beschreibung**

Stand der Technik

Die Erfindung geht aus von einem Verfahren zur Gewinnung von Zuverlässigkeitsinformationen bei M-stufiger Modulation nach der Gattung des Hauptanspruchs. Es ist ein Verfahren zur Gewinnung von Zuverlässigkeitsinformationen bei M-stufiger Modulation von A.J. Viterbi, "Performance of power-controlled wideband terrestrial digital communication", IEEE Transactions on Communications, Vol. 41, No. 4, April 1993, Seite 559 ff. bekannt, bei dem jedoch nur eine Zuverlässigkeitsinformation über ein Symbol, d.h. über eine Datengruppe berechnet wird und alle Daten einer Datengruppe mit der gleichen Zuverlässigkeitsinformation bewertet werden. Dadurch wird die in den einzelnen Bits einer Datengruppe liegende Information nicht vollständig zur Ermittlung der entschiedenen Daten ausgewertet. Somit wird Information, die zur Verfügung steht, nicht genutzt.

Weiterhin wird bei der Berechnung der Zuverlässigkeitsinformation von einer mittleren Empfangsenergie, die sich gleichmäßig auf mehrere Diversity-Pfade aufteilt, ausgegangen. Die einzelnen Empfangspfade eines realen Übertragungskanals übertragen jedoch im allgemeinen unterschiedliche Energien. Sowohl die Annahme einer mittleren Gesamtenergie, als auch die Annahme einer Gleichverteilung dieser ermittelten Energie auf die Diversitiy-Pfade führt im Regelfall zu einer ungenaueren Bestimmung der Zuverlässigkeitsinformation.

Aus der GB-A-2 185 367 ist ein Verfahren zur Gewinnung von bitspezifischer Zuverlässigkeitsinformation bei der Demodulation von M-stufig modulierten Daten, die mittels modulierter Signale übertragen werden, bekannt. Dabei wird das modulierte Signal empfangen, demoduliert und mit abgespeicherten Signalen verglichen. Die modulierten Datenbits werden in ihrer Zuverlässigkeit bewertet, um das empfangene Codewort unter Zuhilfenahme der zugefügten Redundanz zu bewerten bevor die eigentliche Decodierung erfolgt. Die verwendete Modulationsart wird dabei so angenommen, dass der Kanalzustand für jedes einzelne übertragene Bit getrennt gemessen werden kann. Bei höherstufigen Modulationsformen ist der Kanalzustand nicht direkt den übertragenen Bits individuell zuzuordnen.

Ein ähnliches Verfahren ist aus der DE 42 24 214 A bekannt.

Vorteile der Erfindung

Das erfindungsgemäße Verfahren mit den Merkmalen des unabhängigen Anspruchs hat demgegenüber den Vorteil, daß für jedes Bit einer Datengruppe eine individuelle Zuverlässigkeitsinformation ermittelt wird. Dadurch wird die Signifikanz der ermittelten Zuverlässigkeitsinformationen vorteilhaft erhöht.

Durch die in den abhängigen Ansprüchen aufgeführten Maßnahmen sind vorteilhafte Weiterbildungen und Verbesserungen des im Anspruch 1 angegebenen Verfahrens möglich. Besonders vorteilhaft ist es, zur Ermittlung der Zuverlässigkeitsinformation die aktuelle Rauschleistung und die momentane Nutzenergie des empfangenen Signals zu verwenden. Dadurch ist die Berechnung der Zuverlässigkeitsinformation mit hoher Genauigkeit möglich. Vorzugsweise wird die Rauschleistung und die Nutzenergie in festgelegten Zeitabständen geschätzt.

Eine bevorzugte Berechnung der Zuverlässigkeitsinformation besteht darin, die konkreten Verteilungsdichten des beobachteten Empfangssignals unter den Annahmen der M möglichen Sendesignale zu verwenden, wodurch eine besonders genaue Berechnung der Zuverlässigkeitsinformation möglich ist.

Zeichnung

Ein Ausführungsbeispiel der Erfindung ist in der Zeichnung dargestellt und in der nachfolgenden Beschreibung näher erläutert. Es zeigen Figur 1 eine Anordnung zur Durchführung des Verfahrens, Figur 2 einen Programmablauf und Figur 3 eine Wertetabelle.

Beschreibung des Ausführungsbeispiels

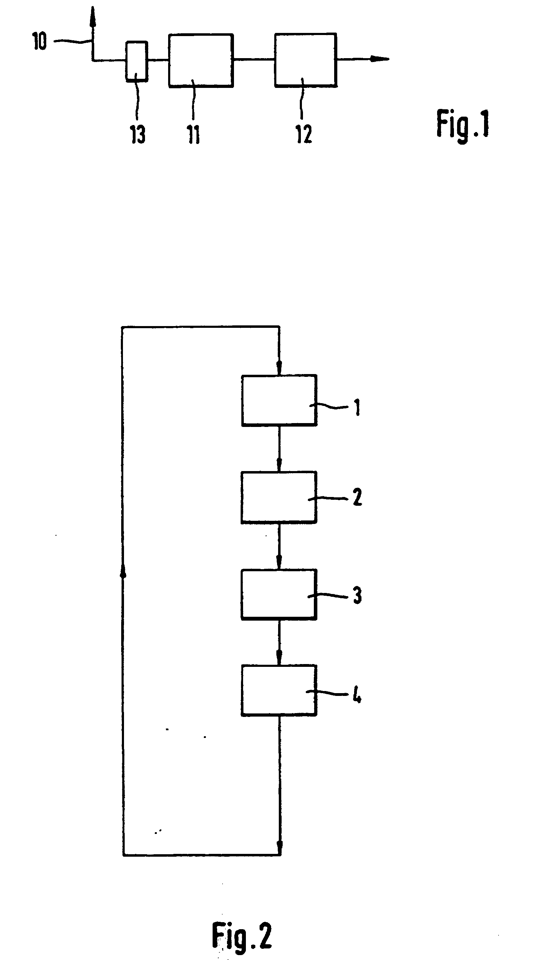

Figur 1 zeigt eine Empfangsantenne 10, die an den Eingang einer Empfangseinheit 13 angeschlossen ist. Ein Ausgang der Empfangseinheit 13 ist mit einem Eingang eines Demodulators 11 verbunden. Ein Ausgang des Demodulators 11 ist mit dem Eingang einer Recheneinheit 12 mit Speicher verbunden. Das von der Empfangsantenne 10 empfangene Signal wird an die Empfangseinheit 13 weitergegeben. Die Empfangseinheit 13 führt eine Verstärkung des empfangenen Signales durch. Anschließend wird das verstärkte Signal von der Trägerfrequenz mittels einer Frequenzmischung in eine Zwischenfrequenz verschoben. Das frequenzverschobene Signal wird verstärkt und dem Demodulator 11 zugeführt. Der Demodulator 11 führt eine Trägerdemodulation durch und gibt das demodulierte Signal an die Recheneinheit 12 weiter.

Figur 2 zeigt schematisch den Programmablauf zum Betreiben der Recheneinheit 12. Bei Programmpunkt 1 wird das demodulierte Signal der Recheneinheit 12 zugeführt. Das demodulierte Signal stellt ein Signal dar, das mithilfe einer M-stufigen Modulation moduliert wurde. Die Anzahl M der Stufen ist größer zwei. Jedes der M Signale, die zur Modulation verwendet werden, repräsentiert ein Symbol, das eine festgelegte Gruppe von Datenbits darstellt. Im Speicher der Recheneinheit 12 sind die zur Modulation verwendeten M Signale abgespeichert. Für jedes der zur Modulation verwendeten M Signale ist in einer Tabelle, die im Speicher der Recheneinheit 12 abgelegt ist, die entsprechende Gruppe von Datenbits abgelegt.

Bei Programmpunkt 2 vergleicht die Recheneinheit 12 das demodulierte Signal mit den abgelegten Signalen. Der Vergleich erfolgt über eine Kreuzkorrelation, wie z.B. bei Proakis, "Digital Communications", McGraw-Hill Int. Book Company, 1983, ISBN 0-07-Y 66490-0, Kapitel 4, Seite 139 ff. beschrieben. Es können jedoch auch andere Vergleichsmethoden wie z.B. die des angepaßten Filterdemodulators verwendet werden. Auf diese Weise werden für das empfangene, demodulierte Signal eine Anzahl M von Übereinstimmungsgrößen $V_j$, j = 0,...,M-1, berechnet, die angeben, wie groß die Übereinstimmung zwischen dem empfangenen, demodulierten Signal und den einzelnen abgelegten Signalen ist.

Für jedes Symbol wird unter Verwendung der Übereinstimmungsvariablen $V_j$ ein Wahrscheinlichkeitswert $P_j$ nach der folgenden Formel berechnet:

$$P_j = \alpha \, Q(V_j)/q(V_j) \qquad ; j=0,...,M-1 \qquad\qquad (11)$$

Die Terme $Q(V_j)$ und $q(V_j)$ stellen Verteilungsdichten dar. Sie beschreiben die Auftrittswahrscheinlichkeiten für den Wert $V_j$ einer ermittelten Übereinstimmungsgröße. Die Dichte $Q(V_j)$ enthält die Annahme, daß tatsächlich das j-te Symbol gesendet wurde, während $q(V_j)$ im Gegenteil hierzu auf der Annahme beruht, daß das aktuelle Symbol nicht das j-te Symbol, sondern eines der anderen ist. Aufgrund i.a. erfüllter Symmetriebedingungen der Sendesymbole (Orthogonalität, gleiche Symbolenergie etc.) sind die Formeln der Dichten $Q(x)$ und $q(x)$ selbst unabhängig vom betrachteten Symbol; der Bezug zum Sendesymbol wird lediglich durch das Argument $V_j$ hergestellt.

Die formelmäßige Festlegung der Dichten $Q(V_j)$ und $q(V_j)$ ist abhängig von der Empfängerrealisierung bzw. vom Bildungsgesetz, das zur Ermittlung der Übereinstimmungsgrößen verwendet wird und kann von der beschriebenen Festlegung je nach Empfänger bzw. Bildungsgesetz abweichen.

In diesem Ausführungsbeispiel wird ein inkohärenter L-Pfad RAKE-Empfänger mit Square-Law-Combining (vgl. J.G. Proakis, Digital Communications, McGraw-Hill New York, 1983, Kapitel 7.5) betrachtet. Die additive Kanalstörung wird als statistisch unabhängige Gaußstörung angenommen. Die Verteilungsdichten lauten dann:

$$q(V_j) = \frac{1}{(2\,\sigma^2)^L (L-1)!} \, V_j^{L-1} \, e^{-\frac{V_j}{2\sigma^2}} \;(\text{zentrale chi}^2\text{-Verteilung}) \qquad\qquad (12)$$

$$Q(V_j) = \frac{1}{2\,\sigma^2} \left(\frac{V_j}{\rho^2}\right)^{((L-1)/2)} e^{-\frac{V_j + \rho^2}{2\,\sigma^2}} \cdot I_{L-1}(\rho\sqrt{V_j}/\sigma^2)$$

( nicht zentrale chi²-Verteilung),

wobei

$2\,\sigma^2 =$     Leistung der additiven Kanalstörung (komplex; äquival. Tiefpaß-Darstellung)

$\rho^2 =$     Gesamte verfügbare Nutzenergie (verteilt auf L Pfade)

$I_n(x) =$     Modifzierte Besselfunktion n-ter Ordnung erster Art bedeuten und sich

die Konstante $\alpha$ unabhängig von der gewählten Empfängerstruktur aufgrund der Beziehung:

$$\alpha \cdot \sum_{j=0}^{M-1} Q(V_j)/q(V_j) = 1$$

ergibt.

Zur Berechnung der Wahrscheinlichkeiten $P_j$ müssen die Rauschleistung $2\sigma^2$ sowie die Nutzenergie $\rho^2$ bekannt sein. Beide Größen sind während des Betriebs fortlaufend zu schätzen.

Bei Programmpunkt 3 wird anschließend für jedes Datenbit einer Gruppe eine individuelle a-posteriori-Wahrscheinlichkeit ermittelt und daraus eine Zuverlässigkeitsinformation für jedes Datenbit berechnet. Dabei werden die Wahrscheinlichkeitswerte $P_j$ der Symbole, bei denen das Datenbit an der $\upsilon$-ten Position in der Datengruppe mit einer festen Hypothese für das Datenbit (z.B. $b_\upsilon$=+1) übereinstimmt, aufsummiert. Die Summe stellt z.B. eine a-posteriori-Wahrscheinlichkeit $P(b_\upsilon$=+1)dafür dar, daß $b_\upsilon$ =+1ist. Entsprechend läßt sich eine a-posteriori-Wahrscheinlichkeit für die Annahmen $b_\upsilon$=-1 bestimmen.

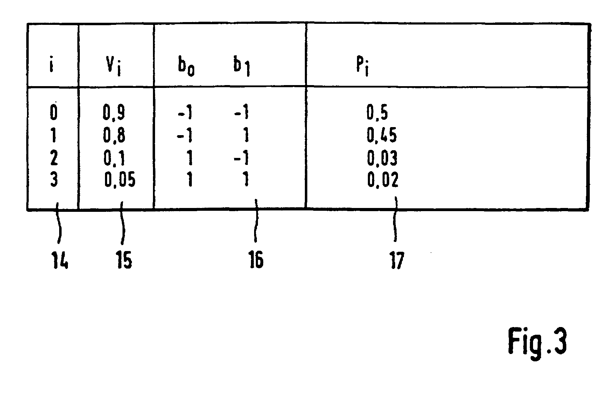

Dieses Verfahren wird anhand der Tabelle der Figur 3 erläutert. Die Tabelle stellt die den Symbolen zugeordneten Bitgruppen $(b_0,b_1)$ von jeweils zwei Datenbits, die Entscheidungsvariablen $V_i$ der Symbole und die Wahrscheinlichkeitswerte $P_i$ der Symbolentscheidung dar.

In der ersten Spalte 14 in Figur 3 sind unter dem Buchstaben i vier verschiedene Symbole mit 0 bis 3 durchnumeriert. In der zweiten Spalte 15 sind unter $V_i$ die Entscheidungsvariablen (Übereinstimmungsgrößen) mit den Werten 0,9, 0,8, 0,1 und 0,05 dargestellt. In diesem Ausführungsbeispiel werden M=4 Symbole verwendet, die durch zwei Datenbits $b_0$ und $b_1$ repräsentiert werden, wobei jedes Datenbit den Wert -1 oder +1 annehmen kann. In der dritten Spalte 16 sind zeilenweise die den vier Symbolen $S_0,S_1,S_2,S_3$ zugeordneten Bitkombinationen dargestellt. Die konkrete Form der Symbole selbst spielt in den aktuellen Betrachtungen keine Rolle; es können z.B. orthogonale Walsh-Symbole verwendet werden.

In der letzten Spalte 17 sind unter $P_j$ die nach Formel (11) berechneten Wahrscheinlichkeitswerte der Symbole dargestellt. Aus der Figur 3 ist zu entnehmen, daß der Wert -1 des Datenbits $b_0$ einmal die Wahrscheinlichkeit 0,5 für das Symbol $S_0$ und einmal die Wahrscheinlichkeit 0,45 für das Symbol $S_1$ aufweist. Somit ergibt sich für den Wert -1 für das Datenbit $b_0$ eine Summenwahrscheinlichkeit von (0,50 + 0,45)=0,95. Für den Wert 1 des Datenbits $b_0$ ergibt sich eine Wahrscheinlichkeit von 0,03 für das Symbol $S_2$ und eine Wahrscheinlichkeit von 0,02 für das Symbol $S_3$. Somit ergibt sich für den Wert +1 für das Datenbit $b_0$ eine Summenwahrscheinlichkeit von (0,03+0,02)=0,05.

Damit ist erkennbar, daß das Datenbit $b_0$ für den Wert -1 eine größere Summenwahrscheinlichkeit aufweist als für den Wert +1. Somit ist es wahrscheinlicher, daß der Wert -1 für das Datenbit $b_0$ richtig ist. Betrachtet man das Datenbit $b_1$, so ergibt sich für den Wert -1 eine Wahrscheinlichkeit von 0,5 für das Symbol $S_0$ und eine Wahrscheinlichkeit von 0,03 für $S_2$. Somit ergibt sich für das Datenbit $b_1$ für den Wert -1 eine Summenwahrscheinlichkeit von (0,5+0,03)=0,53. Betrachtet man den Wert +1 für das Datenbit $b_1$ so ergibt sich aus dem Symbol $S_1$ eine Wahrscheinlichkeit von 0,45 und aus dem Symbol $S_3$ eine Wahrscheinlichkeit von 0,02. Dies führt zu einer Summenwahrscheinlichkeit des Datenbits $b_1$ für den Wert +1 von (0,45+0,02)=0,47.

Damit ergibt sich, daß für das Datenbit $b_1$ der Wert -1 wahrscheinlicher ist.

Die folgende Formel (1) zeigt die Summenwahrscheinlichkeit des Datenbits $b_0$ für den Wert -1.

$$P(b_0=-1)=P_0+P_1 \qquad (1)$$

Die folgende Formel (2) zeigt die Berechnung der Summenwahrscheinlichkeit für das Datenbit $b_0$ für den Wert +1.

$$P(b_0=1)=P_2+P_3 \qquad (2)$$

Aus dem Vergleich in Formel (3) ergibt sich, daß das Datenbit $b_0$ mit -1 entschieden wird.

$$P_{b0}=\max\{P(b_0=-1),P(b_0=1)\}=0,95\Rightarrow b_0=-1 \qquad (3)$$

Die folgende Formel (4) gibt die Berechnung der Summenwahrscheinlichkeit für das Datenbit $b_1$ für den Wert -1 an.

$$P(b_1=-1)=P_0+P_2 \qquad (4)$$

Die folgende Formel (5) gibt die Summenwahrscheinlichkeit für das Datenbit $b_1$ für den Wert +1 an.

$$P(b_1=1)=P_1+P_3 \tag{5}$$

Ein Vergleich der Formel (4) mit der Formel (5) ergibt, daß das Datenbit $b_1$ mit dem Wert -1 entschieden wird.

$$Pb_1=\max\{P(b_1=-1),P(b_1=1)\}=0,53\Rightarrow b_1=-1 \tag{6}$$

Die zugehörigen Zuverlässigkeitsinformationen $L_{b0}$ für das Datenbit $b_0$ und $L_{b1}$ für das Datenbit $b_1$ errechnen sich gemäß:

$$L_{b0} = \log \frac{P_{b0}}{1-P_{b0}} \tag{7}$$

$$L_{b1} = \log \frac{P_{b1}}{1-P_{b1}} \tag{8}$$

Aus den Summenwahrscheinlichkeiten lassen sich über die Formel (7) und die Formel (8) Zuverlässigkeitsinformationen für die Werte -1 oder +1 des Datenbits $b_0$ und $b_1$ berechnen. Die Zuverlässigkeitsinformationen werden dazu verwendet, um eine Aussage darüber zu haben, wie wahrscheinlich die Entscheidung der Datenbits $b_0$ und $b_1$ in die Werte +1 oder -1 ist.
Bei einer Weiterbildung des erfindungsgemäßen Verfahrens werden die Zuverlässigkeitsinformationen mit dem Wert der Datenbits $b_0$ oder $b_1$ entsprechend den folgenden Formeln (9) und (10) multipliziert:

$$\tilde{b}_0 = L_{b0} \cdot b_0 \tag{9}$$

$$\tilde{b}_1 = L_{b1} \cdot b_1 \tag{10}$$

Somit werden für jedes Symbolintervall weiche Datenbits $\tilde{b}_v$, $v = 0,...,ld(M)-1$ berechnet. Mit ld(M) ist der Logarithmus zur Basis 2 von dem Wert M bezeichnet. Weiche Datenbits sind im folgenden explizit für das weiche Datenbit $\tilde{b}_0$ für den Wert -1 und den Wert +1 angegeben.

$$P(b_0=-1) = P_0 + P_1 = 0,95 \Rightarrow L_{b0}^{(-1)} = \log \frac{0,95}{1-0,95}$$

$$\tilde{b}_0^{(-1)} = b_0^{(-1)} \cdot L_{b0}^{(-1)} = -1 \cdot \log \frac{(0,95)}{1-0,95}$$

$$P(b_0 = +1) = P_2 + P_3 = 0,05 = 1-(P_0+P_1)$$

$$\Rightarrow L_{b0}^{(+1)} = \log \frac{0,05}{1-0,05} = -\log \frac{0,95}{1-0,95}$$

$$\tilde{b}_0^{(+1)} = +1 * (-\log \frac{0,95}{1-0,95}) = \tilde{b}_0^{(-1)}$$

Diese Gleichheit gilt allgemein für jedes Datenbit $b_\upsilon$ der Datengruppe.

$$\tilde{b}_\upsilon^{(+1)} = \tilde{b}_\upsilon^{(-1)} \quad , \quad \upsilon = 0,\dots,\mathrm{ld}(M)-1$$

Ohne Einschränkung der Allgemeinheit brauchen so nur die Werte der weichen Datenbits $\tilde{b}_\upsilon$ bestimmt zu werden, um eine Aussage über den Wert des Datenbits $b_0$ als +1 oder -1 entscheiden zu können. Eine explizite Entscheidung für ein Symbol ist nicht mehr nötig oder sinnvoll, da für jedes Datenbit des Symbols eine Entscheidung getroffen wird.

Anschließend erfolgt bei Programmpunkt 4 die Ausgabe der Zuverlässigkeitsinformation bzw.die Ausgabe des weichen Datenbits $\tilde{b}_\upsilon$ .

Abschließend wird zu Programmpunkt 1 verzweigt und ein neues empfangenes und demoduliertes Signal verarbeitet.

Wenn keine weitere Decodierstufe im Übertragungssystem vorhanden ist, für die die Zuverlässigkeitsinformation vorteilhaft verwendet werden könnte, werden aus den weichen Datenbits $\tilde{b}_\upsilon$ die endgültigen Datenbits $b_\upsilon$ hart entschieden. Mit dem Begriff hart entscheiden ist gemeint, daß einer von zwei fest vorgegebenen Werten z.B. +1 oder - 1 entschieden wird. Die weichen Datenbits können auch Werte ungleich +1 oder -1 annehmen. Ein Entscheider gibt für jedes Datenbit $b_\upsilon$ eine +1 aus, wenn das Vorzeichen des weichen Datenbits $\tilde{b}_\upsilon$ positiv ist. Bei negativem Vorzeichen des weichen Datenbits wird $\tilde{b}_\upsilon$ zu -1 entschieden.

Der üblichere Fall ist jedoch, daß die ausgegebenen weichen Datenbits oder die Zuverlässigkeitsinformationen z.B. von einem Dekoder zur Entscheidung von Informationsbits weiterverarbeitet werden. Als Decoder kann ein Kanal- oder Quelldecoder eingesetzt werden, der z.B. in Form eines Viterbidecoders ausgebildet ist.

Bei Verwendung der weichen Datenbits $\tilde{b}_\upsilon$ zur Entscheidung von Informationsbits wird von einem Decoder bei einem negativen Wert des weichen Datenbits das Informationsbit mit -1 angenommen und bei einem positiven Wert des weichen Datenbits das Informationsbit mit +1 angenommen.

Der Betrag des weichen Datenbits wird als Zuverlässigkeitsinformation interpretiert und z.B. zur Bewertung der Pfadmetriken bei einer Dekodierung mit dem Viterbi-Algorithmus eingesetzt.

Durch die Gewinnung und Verwendung der Zuverlässigkeitsinformation bzw. der weichen Datenbits ist es möglich, bei M-stufiger Modulation bei der Demodulation eine bitweise Zusatzinformation (Zuverlässigkeitsinformation, weiches Datenbit) zu erhalten, die eine Wahrscheinlichkeit dafür angibt, wie sicher eine Entscheidung eines Datenbits ist. Dadurch werden M-stufige Übertragungsverfahren im Hinblick auf die Zuverlässigkeit bei der Entscheidung von "harten" Datenbits, d.h. Datenbits, die nur vorgegebene Werte wie z.B. +1 oder -1 annehmen können, verbessert.

Unter Einbeziehung der Zusatzinformation lassen sich M-stufige Übertragungsverfahren effizient in Systemen mit nachgeschalteten Decodern einsetzen. Die Zusatzinformation wird vorteilhaft von nachfolgenden Signalverarbeitungseinheiten wie Kanal- oder Quelldecodern zur Verbesserung der Entscheidungssicherheit genutzt.

Der Vergleich des empfangenen demodulierten Signales mit den abgespeicherten Signalen erfolgt z.B. in Form einer Walsh-Hadamard-Transformation, wenn zur M-stufigen Modulation orthogonale Walsh-Funktionen benutzt werden. Auf diese Weise kann ein einfacher, inkohärenter Empfänger verwendet werden. Als Entscheidungsvariablen werden die Betragsquadrate der Walsh-Hadamard-Transformationen verwendet.

Im Falle eines Diversity-Empfängers, wie z.B. eines RAKE-Empfängers oder eines Antennen-Diversity, der eine festgelegte Anzahl L an Übertragungspfaden aufweist, werden die Entscheidungsvariablen der einzelnen Übertragungspfade zu einer Gesamtentscheidungsvariablen $Vg_j$ addiert. Dies erfolgt z.B. durch folgende Formel:

$$Vg_j = \sum_{n=0}^{L-1} V_j(n), \quad j = 0,...,M-1.$$

**Patentansprüche**

1. Verfahren zur Gewinnung von bitspezifischer Zuverlässigkeitsinformation bei der Demodulation von modulierten Daten, die mittels modulierter Signale übertragen werden, wobei das modulierte Signal empfangen wird und mit abgespeicherten Signalen verglichen wird, wobei jedes abgespeicherte Signal und jedes modulierte Signal eine festgelegte Gruppe von Datenbits repräsentiert, wobei die festgelegten Gruppen abgespeichert sind und aus dem Vergleich des demodulierten Signals mit den abgespeicherten Signalen für jedes abgespeicherte Signal eine Wahrscheinlichkeit für das Übereinstimmen des modulierten Signals mit dem abgespeicherten Signal berechnet wird und wobei aus den berechneten Wahrscheinlichten für jedes Datenbit $b\gamma$ einer Gruppe eine Zuverlässigkeitsinformation oder ein aus der Zuverlässigkeitsinformation ermitteltes weiches Datenbit ermittelt wird **dadurch gekennzeichnet, dass** die Daten M-stufig moduliert sind, wobei M größer als zwei ist und M verschiedene Sendesignalsymbole verwendet werden.

2. Verfahren nach Anspruch 1, **dadurch gekennzeichnet, daß** zur Ermittlung der Zuverlässigkeitsinformation eine als bekannt angenommene mittlere Rauschleistung und eine als bekannt angenommene Nutzenergie des empfangenen Signals verwendet werden.

3. Verfahren nach Anspruch 1, **dadurch gekennzeichnet, daß** die Rauschleistung und die Nutzenergie in festgelegten Zeitabständen geschätzt werden.

4. Verfahren nach einem der Ansprüche 2 und 3, **dadurch gekennzeichnet, daß** die Wahrscheinlichkeit $P_j$ für jedes modulierte, empfangene Signal nach folgenden Formeln berechnet werden:

$$P_j = \alpha * Q(V_j)/q(V_j) \qquad ;j=0,...,M-1, \text{ wobei} \tag{11}$$

$Q(V_j)$ eine Verteilungsdichtefunktion einer ermittelten Übereinstimmungsgröße $V_j$ unter der Annahme ist, daß das tatsächlich gesendete Symbol das j-te Symbol ist und

$q(V_j)$ eine Verteilungsdichtefunktion der ermittelten Übereinstimmuungsgröße $V_j$ unter der Annahme ist, daß das tatsächlich gesendete Symbol <u>nicht</u> das j-te Symbol ist, und daß sich

die Konstante $\alpha$ aufgrund der Beziehung

$$\alpha \cdot \sum_{j=0}^{M-1} Q(V_j)/q(V_j) = 1 \text{ ergibt,}$$

wobei
M die Anzahl der Stufen der Modulation darstellt.

5. Verfahren nach einem der Ansprüche 1 bis 4, **dadurch gekennzeichnet, daß** die Wahrscheinlichkeit dafür, daß das Datenbit an der $\upsilon$-ten Position in der Datengruppe +1 bzw. -1 ist P($b_\upsilon$ = +1/-1), aus der Summation der Wahrscheinlichkeiten ermittelt wird, die aus dem Vergleich des modulierten Signales mit den abgespeicherten Signalen ermittelt wurden, wobei nur die Wahrscheinlichkeiten verwendet werden, bei denen das Datenbit der abgelegten Signale an der $\upsilon$-ten Position der Gruppe ebenfalls eine +1 bzw. -1 darstellt.

**6.** Verfahren nach einem der Ansprüche 1 bis 5, **dadurch gekennzeichnet, daß** für das Datenbit $b_\upsilon$ ein Wert von +1 angenommen wird und eine Zuverlässigkeitsinformation $L_\upsilon^{(+1)}$ gemäß

$$L_\upsilon^{(+1)} = \log \frac{P(b_\upsilon = +1)}{P(b_\upsilon = -1)} = \log \frac{P(b_\upsilon = +1)}{1 - P(b_\upsilon = +1)}$$

ermittelt wird.

**7.** Verfahren nach Anspruch 6, **dadurch gekennzeichnet, daß** aus der Zuverlässigkeitsinformation $L_\upsilon^{(+1)}$ ein weiches Datenbit $\tilde{b}_\upsilon$ (+1) gemäß

$$\tilde{b}_\upsilon^{(+1)} = b_\upsilon \cdot L_\upsilon^{(+1)} = \log \frac{P(b_\upsilon = +1)}{1 - P(b_\upsilon = +1)}$$

ermittelt wird.

**8.** Verfahren nach einem der Ansprüche 1 bis 5, **dadurch gekennzeichnet, daß** für ein Datenbit $b_\upsilon$ ein Wert von -1 angenommen wird und eine Zuverlässigkeitsinformation $L_\upsilon^{(-1)}$ gemäß

$$L_\upsilon^{(-1)} = \log \frac{P(b_\upsilon = -1)}{P(b_\upsilon = +1)} = \log \frac{P(b_\upsilon = -1)}{1 - P(b_\upsilon = -1)}$$

ermittelt wird.

**9.** Verfahren nach Anspruch 8, **dadurch gekennzeichnet, daß** ein weiches Datenbit $\tilde{b}_\upsilon$ (-1) gemäß

$$\tilde{b}_\upsilon^{(-1)} = b_\upsilon^{(-1)} \cdot L_\upsilon^{(-1)} = \log \frac{P(b_\upsilon = -1)}{1 - P(b_\upsilon = -1)}$$

**10.** Verwendung des Verfahrens nach einem der Ansprüche 1 bis 9 bei der Kanaldecodierung oder bei der Quelldecodierung.

**Claims**

**1.** Method for obtaining bit-specific reliability information during the demodulation of M-stage-modulated data which are transmitted by means of modulated signals, the modulated signal being received and being compared with stored signals, each stored signal and each modulated signal representing a defined group of data bits, the defined groups being stored and a probability for the correspondence of the modulated signal with the stored signal being calculated from the comparison of the demodulated signal with the stored signals for each stored signal, and reliability information or a soft data bit which is determined from the reliability information being determined from the calculated probabilities for each data bit bγ of a group, **characterized in that** the data are M-stage modulated, M being greater than two and M different transmitted-signal symbols being used.

2. Method according to Claim 1, **characterized in that** a mean noise power, which is assumed to be known, and useful energy, which is assumed to be known, of the received signal are used to determine the reliability information.

3. Method according to Claim 1, **characterized in that** the noise power and the useful energy are estimated at defined time intervals.

4. Method according to Claims 2 and 3, **characterized in that** the probability $P_j$ for each modulated, received signal is calculated in accordance with the following formulae:

$$P_j = \alpha * Q(V_j)/q(V_j) \qquad ;j=0,...,M-1, \qquad (11)$$

where

$Q(V_j)$   is a distribution density function of a determined correspondence variable $V_j$ on the assumption that the actually transmitted symbol is the j-th symbol and

$q(V_j)$   is a distribution density function of the determined correspondence variable $V_j$ on the assumption that the actually transmitted symbol is <u>not</u> the j-th symbol, and wherein

the constant $\alpha$ is obtained from the relationship

$$\alpha \cdot \sum_{j=0}^{M-1} Q(Vj)/q(Vj) = 1,$$

   where
M represents the number of stages of modulation.

5. Method according to one of Claims 1 to 4, **characterized in that** the probability that the data bit at the ν-th position in the data group +1 or -1 is $P(b_\nu = +1/-1)$ is determined from the summation of the probabilities which have been determined from the comparison of the modulated signal with the stored signals, only those probabilities being used in the case of which the data bit of the stored signals at the ν-th position of the group likewise represents a +1 or -1.

6. Method according to one of Claims 1 to 5, **characterized in that** a value of +1 is assumed for the data bit $b_\nu$ and reliability information $L_\nu^{(+1)}$
**is determined in accordance with**

$$L_\nu^{(+1)} = \log \frac{P(b_\nu = +1)}{P(b_\nu = -1)} = \log \frac{P(b_\nu = +1)}{1 - P(b_\nu = +1)}$$

7. Method according to Claim 6, **characterized in that** a soft data bit $\tilde{b}_\nu$ (+1) is determined from the reliability information $L_\nu^{(+1)}$ in accordance with

$$\tilde{b}_\upsilon^{(+1)} = b_\upsilon^{(+1)} \cdot L_\upsilon = \log \frac{P(b_\upsilon = +1)}{1- P(b_\upsilon = +1)}$$

8. Method according to one of Claims 1 to 5, **characterized in that** a value of -1 is assumed for a data bit $b_v$ and reliability information $L_\upsilon^{(+1)}$ **is determined in accordance with**

$$L_\upsilon^{(-1)} = \log \frac{P(b_\upsilon = -1)}{P(b_\upsilon = +1)} = \log \frac{P(b_\upsilon = -1)}{1 - P(b_\upsilon = -1)}$$

9. Method according to Claim 8, **characterized in that** soft data bit $\tilde{b}_\upsilon$ (-1) is determined in accordance with

$$\tilde{b}_\upsilon^{(-1)} = b_\upsilon^{(-1)} \cdot L_\upsilon^{(-1)} = \log \frac{P(b_\upsilon = -1)}{1- P(b_\upsilon = -1)}$$

10. Use of the method according to one of Claims 1 to 9, channel decoding or in source decoding in.

**Revendications**

1. Procédé pour obtenir une information de fiabilité spécifique à un bit lors de la démodulation de données modulées transmises par des signaux modulés selon lequel
   on reçoit le signal modulé et on le compare à des signaux mis en mémoire,
   chaque signal mis en mémoire et chaque signal modulé représentant un groupe fixe de bits de données,
   on enregistre en mémoire les groupes fixes et à partir de la comparaison du signal modulé et des signaux mis en mémoire, pour chaque signal mis en mémoire on calcule une probabilité pour la concordance entre le signal modulé et le signal mis en mémoire et à partir des probabilités calculées pour chaque bit de données d'un groupe, on détermine une information de fiabilité ou un bit de données souple obtenu à partir de l'information de fiabilité,
   **caractérisé en ce que**
   les données sont des données à modulation de niveau M, M étant supérieur à 2 et M utilisant différents symboles de signaux d'émission.

2. Procédé selon la revendication 1,
   **caractérisé en ce que**
   pour déterminer l'information de fiabilité on utilise une puissance de bruit moyenne, supposée connue et une énergie utile supposée connue du signal de réception.

3. Procédé selon la revendication 1,
   **caractérisé en ce que**
   la puissance de bruit et l'énergie utile sont évaluées à des intervalles de temps déterminés.

4. Procédé selon l'une des revendications 2 et 3,
   **caractérisé en ce que**
   pour chaque signal reçu modulé on calcule la probabilité $P_j$ selon les formules suivantes :

$$P_j = \alpha * Q(V_j)/q(V_j) \qquad ; j=0,...,M-1 \tag{11}$$

$Q(V_j)$     fonction de densité de distribution d'une grandeur de concordance obtenue $V_j$ dans l'hypothèse que le symbole effectivement émis est le symbole d'ordre j et

$q(V_j)$     représente une fonction de distribution de densité de la grandeur de concordance obtenue $V_j$ dans l'hypothèse que le symbole effectivement émis <u>n'est pas</u> le symbole d'ordre j et

la constante $\alpha$ correspond à la relation suivante :

$$\alpha \cdot \sum_{j=0}^{M-1} Q(V_j)/q(V_j) = 1$$

dans laquelle M est le nombre de niveaux de modulation.

**5.** Procédé selon l'une des revendications 1 à 4,
**caractérisé en ce que**
la probabilité que le bit de données pour la position $\nu$ est dans le groupe de données +1 ou -1, $P(b_\nu = +1/-1)$, résulte de la sommation des probabilités obtenues de la comparaison du signal modulé et des signaux enregistrés en mémoire, en utilisant seulement les probabilités pour lesquelles le bit de données des signaux enregistrés à la position d'ordre $\nu$ du groupe représente également une valeur +1 ou -1.

**6.** Procédé selon l'une des revendications 1 à 5,
**caractérisé en ce que**
pour le bit de données $b_\nu$ on prend une valeur +1 et une information de fiabilité $L_\nu^{(+1)}$ donnée par la relation suivante :

$$L_\nu^{(+1)} = \log \frac{P(b_\nu = +1)}{P(b_\nu = -1)} = \frac{P(b_\nu = +1)}{1 - P(b_\nu = +1)}$$

**7.** Procédé selon la revendication 6,
**caractérisé en ce qu'**
à partir de l'information de fiabilité $L_\nu^{(+1)}$ on détermine un bit de données souple $\tilde{b}_\nu(+1)$ selon la relation suivante

$$\tilde{b}_\nu^{(+1)} = b_\nu \cdot L_\nu^{(+1)} = \log \frac{P(b_\nu = +1)}{1 - P(b\nu = +1)}$$

**8.** Procédé selon l'une des revendications 1 à 5,
**caractérisé en ce que**
pour un bit de données $b_\nu$ on prend la valeur -1 et une information de fiabilité $L_\nu^{(-1)}$ selon la formule suivante :

$$L_\nu^{(-1)} = \log \frac{P(b_\nu = -1)}{P(b_\nu = +1)} = \log \frac{P(b_\nu = -1)}{1 - P(b_\nu = -1)}$$

**9.** Procédé selon la revendication 8,
**caractérisé en ce qu'**
on détermine bit de données souple $\tilde{b}_\nu^{(-1)}$ selon la formule suivante :

$$\widetilde{b}_{\upsilon}^{(-1)} = b_{\upsilon}^{(-1)} \cdot L_{\upsilon}^{(-1)} = \log \frac{P(b\upsilon = -1)}{1 - P(b_{\upsilon} = -1)}$$

**10.** Application du procédé selon l'une des revendications 1 à 9 pour le décodage de canal ou le décodage de source.

Fig.1

Fig.2

| i | $V_i$ | $b_0$ | $b_1$ | $P_i$ |
|---|---|---|---|---|
| 0 | 0,9 | -1 | -1 | 0,5 |
| 1 | 0,8 | -1 | 1 | 0,45 |
| 2 | 0,1 | 1 | -1 | 0,03 |
| 3 | 0,05 | 1 | 1 | 0,02 |

14     15         16         17

Fig.3